# EUROPEAN PATENT SPECIFICATION

(11) **EP 4 056 030 B1**
(45) Date of publication and mention of the grant of the patent: **29.04.2026**
(21) Application number: 22161414.2
(22) Date of filing: 10.03.2022
(51) Int. Cl.: A01G 13/21, A01G 9/22

(54) **SYSTEM FOR PROTECTING CROPS AGAINST WEATHER CONDITIONS**
SYSTEM ZUM SCHUTZ VON KULTURPFLANZEN VOR WITTERUNGSBEDINGUNGEN
SYSTÈME DE PROTECTION DES CULTURES CONTRE DES CONDITIONS CLIMATIQUES

(30) Priority: 11.03.2021 PL 43727421
(43) Date of publication of application: 14.09.2022
(73) Proprietor: Dominiak, Marzena, Bledow (PL)
(72) Inventor: Dominiak, Marzena, Bledow (PL)
(74) Representative: Kaminski, Piotr

(56) References cited:
- EP-A1- 1 529 438
- DE-A1- 2 908 330
- NL-A- 8 901 473
- US-A- 4 375 232
- US-A1- 2004 244 284
- US-A1- 2020 157 835

## Description

The object of the invention is a system for protection of crops against weather conditions.

Operating field crops, for example operating an orchard with fruit trees, is often associated with a high risk of yield loss, which is caused by adverse weather conditions such as: hail, intense rainfall, intense sunlight, frost. In addition, yield loss may also be caused by foraging birds or insects.

In order to reduce the risk of yield loss in orchards, a protective system in the form of nets is most often used to protect the orchard from hail. The system involves stretching a net in the form of a gabled roof along the rows of trees, with the nets being connected to each other by, for example, strings or clips. In addition, the nets have holes in them which open when they are loaded with hail, releasing balls of ice onto the ground. The net is stretched over pre-built structures containing poles between which a wire is stretched.

In addition, to protect the orchard from rain or foraging birds, a protective system is used in the form of strips of plastic sheeting which, like nets, are stretched lengthways over the rows of trees so that the plastic sheeting forms a canopy. The plastic sheeting over the inter-rows is tied together with rubber ropes. This design prevents rain from falling on the crop. Water flows down the canopy to the inter-rows, preventing excessive watering of the trees.

The disadvantage of the above solutions is that the nets or foil have to be manually unfolded and rolled up, which means that such a protective system does not provide effective protection against sudden changes in weather conditions. This is due to the long time needed to change the configuration of the system, e.g. unfolding/folding the foil or changing from the net to the foil and vice versa. In addition, known orchard protective systems can only adopt a configuration in which the net or foil is rolled out over the tree rows, which in periods of low rainfall does not allow the water from the rainfall to be concentrated on the tree rows.

EP1529438 discloses a system for protecting crops having features corresponding to preamble of claim 1.

DE 29 08 330 A1, US 2020/157835 A1, NL 8 901 473 A, US 4 375 232 A and US 2004/244284 A1 illustrate alternative cultivation covering systems.

It would be advisable to develop an alternative design of a system for protecting crops that would allow for a greater number of foil spreading configurations, as well as reduce the time taken to roll, spread the net or foil, including changing their configuration.

The object of the invention is a system for protecting crops according to appended claims.

The system is suitable for protecting both row crops (e.g. trees or fruit bushes) and field crops (e.g. tomatoes or root vegetables).

Positioning the sheets in a sloping configuration ensures that precipitation can flow over them.

The guides can be in the form of supporting ropes, wires, pipes, rolled or coldrolled profiles, open or closed - in other words, any element that allows the protective encasement sheets to be hung thereon so that it can be moved.

Installing the protective encasement sheets on guides ensures the possibility of changing the configuration of the sheets depending on the current weather conditions. The sheets may be slidably mounted using different configurations of control or configuration ropes attached at the top or bottom of the sheets, as will be discussed below.

The protective encasement sheets are advantageously made of a material substantially impermeable to water. By this it is meant the material which, in particular, does not allow water from rainfall to pass through, so that most of the water runs off the sheet. This does not exclude the possibility that the sheets may have small openings through which water can pass, for example openings forming the attachment points of the sheets.

The protective encasement sheets may be made of a foil, preferably transparent. The foil can be made of different materials, not only typical plastics commonly used as foils, but also advanced materials such as graphene or aerogel. In particular, plastic foils may be used such as those currently used in systems for protecting plants in which non-movable foil sheets are used.

The distance between the outermost rows of supports can range from a few to several tens, or even hundreds or thousands of metres. For larger areas to be protected, there may be rows of intermediate supports between the outermost rows of supports, auxiliary to supporting the guides.

The length of each row may vary from a few to several dozen, or even several hundred or several thousand metres. The individual supports in a row may be several to several dozen or several hundred metres apart.

The height of the supports and the height of the lower edges of the sheets is dependent on the type of crop. For example, in case of fruit trees, the sheets may be suspended so that the bottom edges are at a height of 3 metres and the top edges are at a height of 4.5 metres. For root vegetable crops on the other hand, the lower edges of the sheets may be at a height of 1 metre or less. If necessary, the encasement can be installed even at higher heights of up to 10 metres.

Several to several dozen, or even hundreds or thousands of pairs of encasement sheets may be attached between the rows. In addition to encasement sheets in pairs, outermost encasement sheets may be mounted without a matching pair.

The sum of the widths d1+d2 of the protective encasement sheets in a pair, when row crops are protected, should be greater than the width D of one row, so that the sheets can be positioned over the rows in a controlled manner.

The supports may take the form of poles made of wood, metal or prestressed concrete. Advantageously, the supports are anchored multidirectionally, which has a positive effect on the strength (e.g. wind resistance) of the whole system.

The paired sheets may be separate strips of protective encasement, or they may be one strip of protective encasement gripped in the middle, so that the upper edges of the paired sheets are integrated together.

The system may also incorporate a single outer sheet of protective encasement.

Between the supports of opposite rows along the guides, control ropes extend from the top edges of the protective encasement sheets at the points where the protective encasement sheets are attached to the guides.

The control ropes serve to control the position of the protective encasement sheets on the guides.

This makes it possible to control the position of the upper edges of the sheets.

Between the supports of the opposite rows and below the protective encasement sheets there extend configuration ropes attached to the lower protective encasement sheets.

The configuration ropes are used to change the position of the lower edges of the protective encasement sheets in a direction parallel to the guides.

This makes it possible to control the position of the lower edges of the protective encasement sheets.

The protective encasement sheets may comprise circumferentially reinforced openings providing fixing points for the sheets to suspensions, slides, control ropes and/or configuration ropes.

These openings allow the sheets to be suspended so that the rope passes through the opening and is fixed or slidably attached thereto, or the openings may be used to attach hooks so that the hooks pass through the openings. The hooks may in turn be attached to carriages on guides. The istalling of the sheet to the rope, either directly or by means of hooks or other pendants, is well known and needs no further discussion.

The ends of the ropes may be wound onto drums of rope control mechanisms. The drums may be controlled manually by cranks or electrically by servomotors.

Ropes may be steel monofilament wire ropes of a diameter and strength selected according to their length and to the weight they are to carry.

If the upper control ropes and the lower configuration ropes are installed simultaneously, it is possible to move the sheets spread over the protected area, which is advantageous in particular for row crops. In this case, it is possible to place pairs of the protective encasement sheets in a configuration in which the lower edges of the sheets are substantially above the rows of plants or in a configuration in which the lower edges of the sheets are between the rows of plants.

As a result, for a configuration in which the lower edges of the sheets are substantially above the rows of plants, in the event of negligible rainfall, it is possible to accumulate water from rainfall on the plants, thus reducing the need for additional irrigation of the crop.

In addition, in winter, when snow falls, this configuration makes it possible to accumulate snow on the plants, in order to protect them better against frost.

On the other hand, for the configuration in which the lower edges of the sheets are between the rows of plants, in case of excessive rainfall it is possible to direct the rainwater away from the rows of plants. In addition, in this setting, the protective encasement sheets protects the crop from hail.

In each of the above configurations, the system for protecting in form of protective encasement sheets also protects the crop from frost or wind.

The control ropes and/or configuration ropes may be twice the length of the distance between the support rows.

As a result, it is possible to slide the protective encasement sheets into the area near one of the support rows, for example to ventilate the crop when the temperature under the cover sheets is too high.

The configuration ropes may comprise first configuration ropes attached to the lower edges of the first protective encasement sheets and second configuration ropes attached to the lower edges of the second protective encasement sheets in each pair.

The first configuration ropes and the second configuration ropes enable the distance between the lower edges of adjacent protective encasement sheets to be varied.

In this way, it is possible to position the protective encasement sheets in such a way that the lower edges of the adjacent protective encasement sheets are spaced apart by a certain distance, which allows partial ventilation of the orchard while preventing excessive temperature rise under the canopy.

In addition, a net sheet may be slidably fixed to the guides, to which control ropes are attached at the fixing points of the net to the guides.

As a result, the control ropes and the configuration ropes enable the system to be set to a configuration in which the protective encasement sheets are spread over the crop and the net is retracted at the first row of supports, or to a configuration in which the net is spread over the crop and the protective encasement sheets are retracted at the second row of supports, or to a configuration in which the net is retracted at the first row of supports and the protective encasement sheets are retracted at the second row of supports.

In this way, depending on the needs and weather conditions, it is possible to quickly change the configuration and type of crop cover between the net and encasement sheets. Net covering is advantageously used to reduce the amount of sunlight on the crop, to protect against hail or pests. As a result, the use of the net in hot weather prevents an excessive rise in temperature underneath it, while at the same time protecting the plants from sunburn.

Advantageously, the net comprises circumferentially reinforced openings, arranged in rows parallel to the rows of supports, which allow for it to be suspended on the guides. For example, the net may be suspended on the guides, by means of hooks which pass through the openings.

Along one or more rows of supports there may be a protective encasement strip which sits above the folded protective encasement sheets or the folded net.

The protective encasement strip protects the folded protective encasement sheets and/or the folded net from sunlight, so that the life of the protective encasement sheets and the net is extended, since the reduction of UV radiation slows down the deterioration of the plastic material of the foils and the net.

Advantageously, the protective encasement strip is unfolded when the protective encasement sheets and/or the net are moved into the areas near the rows so as to cover them from above. Said protective strip is preferably folded to be as small as possible when the encasement sheets are unfolded, so as not to obstruct the sunlight for the growing plants.

The protective encasement may be in the form of a foil.

On the configuration ropes and along the protective encasement sheets there may be strips of insulation encasement, to which there are attached third configuration ropes extending between the supports of opposite rows next to the configuration ropes.

The third configuration ropes are used to fold and unfold the insulation encasement. The insulation encasement strips rest on one of the remaining sets of configuration ropes. When unfolded, the insulation encasement foil provides additional thermal insulation, particularly due to the formation of longitudinal air chambers, between the protective encasement sheets and the insulation encasement strips.

The insulation encasement may be in the form of a foil.

The insulation encasement strips may be as wide as the maximum distance between the lower edges of the sheets.

As a result, when unfolded, the insulation encasement strips form a continuous surface over the entire growing area.

The insulation encasement strips may have a width greater than the maximum distance between the lower edges of the sheets, and at half of their width they are attached on auxiliary ropes to the guides.

Advantageously, the length of the auxiliary ropes may be adjustable, so that it is possible to partially raise the central part of the insulation encasement strips so that their sides form an additional gabled canopy over the crop under the protective encasement sheets. As a result, it is possible to use successive layers of insulation encasement strips, which create additional air chambers between each other, thus increasing the thermal insulation of the system.

The insulation foil can be made of plastic having lower transparency than the protective foil. This makes it possible to reduce the effect of solar radiation on the crop. This is particularly of use in case of large daily temperature differences, when there is a lot of sunlight during the day and frost at night. In addition, the air in the chambers heats up considerably during the day and acts as a thermal buffer during the night.

The control ropes may be adapted to independently unfold the upper edges of the first sheets relative to the upper edges of the second sheets.

This makes it possible to achieve a gap between the upper edges.

A net may be attached between the upper edges of the first sheets and the upper edges of the second sheets.

The net becomes visible when the upper edges are pulled apart.

The configuration ropes may be adapted to independently extend the lower edges of the first sheets relative to the lower edges of the second sheets.

This makes it possible to obtain a gap between the upper edges.

A net may be attached between the lower edges of the first sheets and the lower edges of the second sheets.

The net becomes visible when the upper edges are pulled apart.

To sum up, the system for protecting, which is essentially an airtight roof over the crop, increases the temperature in the growing area and protects against the negative effects of night frosts, thus improving the growing conditions of the crops.

In addition, the system for protecting ensures the stable production capacity of the crop from one season to the next and avoids the situations that arise in case of crops without systems for protecting, where every few years, due to sudden changes in the weather and/or losses due to pests, a large part of the crop is no longer of commercial value. As a result, by implementing the system for protecting according to the invention, it is possible to reduce the area of cultivation, which at present is several times more than the actual demand, due to fact that there are years when, due to favourable weather conditions, there is a large overproduction and years when, despite huge areas of planting, due to unfavourable weather conditions, the harvest of fruit or vegetables is insufficient. It should also be noted that the cultivation of unnecessary areas of orchards or vegetables always generates carbon dioxide. Therefore, by using the system for protecting according to the invention, due to the greater certainty of a substantially constant amount of yield from a particular area of cultivation in each growing cycle, it is possible to reduce the areas with crops, thus reducing the carbon footprint.

In addition, the system for protecting can be used to provide suitable conditions for various types of work (not related to plant cultivation) or for the storage of materials sensitive to changing weather conditions.

The object of the invention is shown in exemplary embodiments in the drawings, in which:
Fig. 1 shows schematically in oblique view, the system for protecting crops in the first exemplary embodiment in a configuration in which the lower edges of the sheets are above the rows of plants;
Fig. 2 shows schematically, in oblique view, the system for protecting crops in the first exemplary embodiment, when changing the configuration of the position of the sheets of protective encasement;
Fig. 3 shows schematically, in oblique view, the system for protecting crops in the first exemplary embodiment in a configuration in which the lower edges of the protective encasement sheets are between the rows of plants;
Fig. 4 shows schematically, in oblique view, the system for protecting crops in a second exemplary embodiment, in which the protective encasement sheets are above the crop and the net is folded next to one of the rows of supports;
Fig. 5 shows schematically, in oblique view, the system for protecting crops in the second exemplary embodiment, during the unfolding of the net and the sliding of the protective encasement sheets;
Fig. 6 shows schematically in oblique view, the system for protecting crops in a third exemplary embodiment, wherein the position of the lower edges of the first protective encasement sheets can be adjusted independently of the position of the lower edges of the second protective encasement sheets in the pair;
Fig. 7 shows schematically, in oblique view, the system for protecting crops in a fourth exemplary embodiment, wherein unfoldable insulation encasement strips are provided under the protective encasement sheets;
Fig. 8 shows schematically, in oblique view, the system for protecting crops in a fourth exemplary embodiment, during unfolding of the insulation encasement strips;
Fig. 9 is a schematic representation of the system for protecting crops in a diagonal view of the fourth exemplary embodiment, with the insulating foil unfolded;

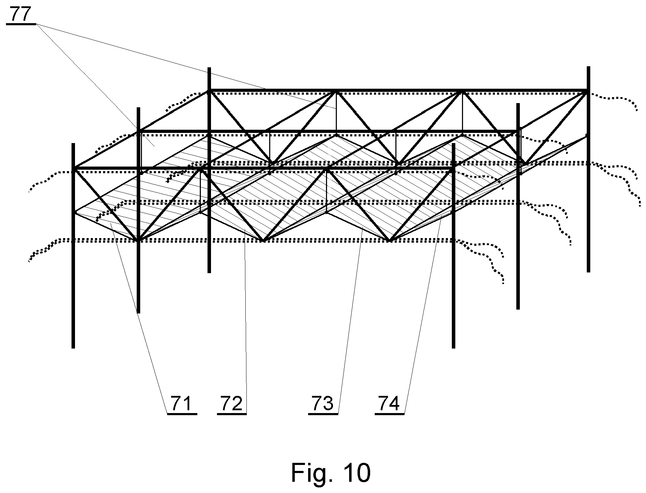

Fig. 10 shows schematically, in oblique view, the system for protecting crops in a fourth exemplary embodiment, wherein the position of the insulation encasement can be adjusted in the vertical direction;
Fig. 11 depicts schematically in oblique view, the system for protecting crops in a fifth exemplary embodiment, with the upper edges of the sheets in a pair spaced apart.
Fig. 12 shows schematically, in oblique view, the system for protecting crops in a sixth exemplary embodiment, with the lower edges of the sheets in a pair spaced apart.

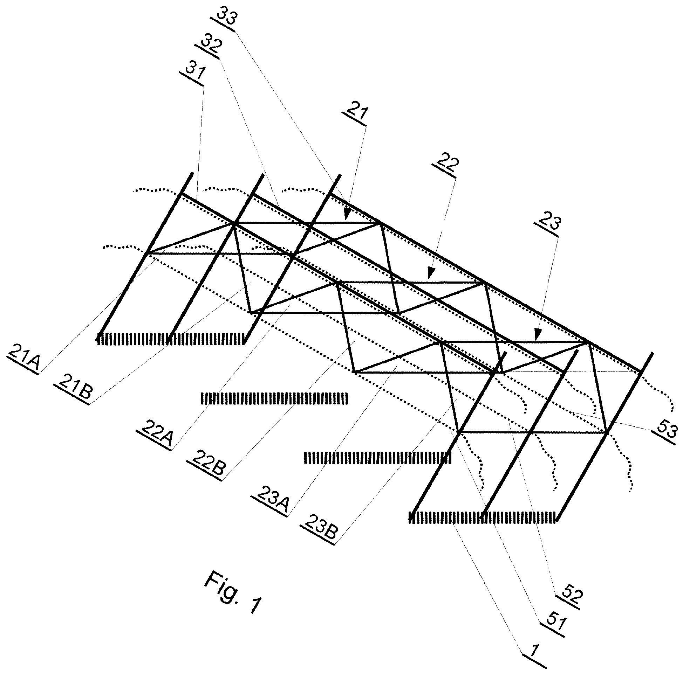

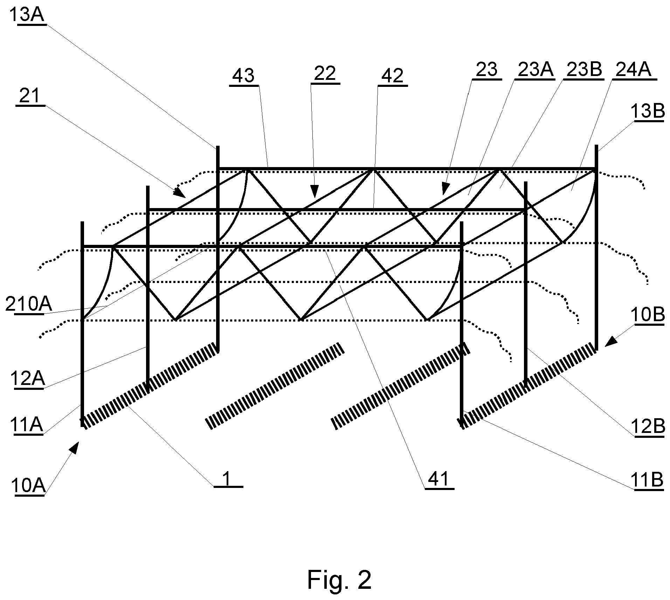

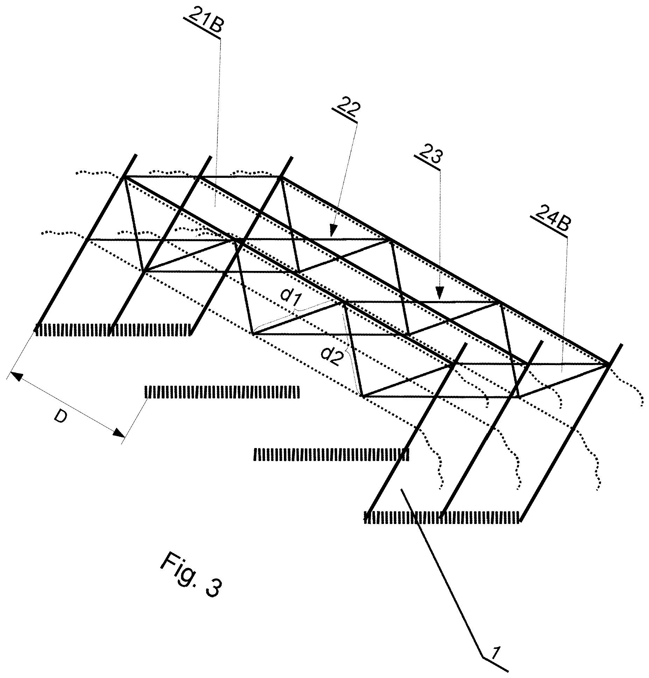

In the first exemplary embodiment (Figs. 1-3), the system for protecting crops planted in rows includes two outermost rows 10A, 10B of prestressed concrete supports 11A-13A, 11B-13B which are parallel to the rows 1 of plants, wherein the rows 10A, 10B of supports 11A-13A, 11B-13B are arranged at the outermost rows 1 of plants and there are two more rows 1 of plants between them. Further, the system includes three guides 31, 32, 33 in the form of support ropes fixed between supports 11A-11B, 12A-12B, 13A-13B of the opposite rows 10A, 10B of supports 11A-13A, 11B-13B, three pairs of protective encasement sheets 21, 22, 23 in the form of transparent foil fixed slidably on the support ropes 31, 32, 33 and extending perpendicularly relative to the support ropes 31, 32, 33, wherein the respective pairs 21, 22, 23 include a first sheet 21A, 22A, 23A sloping downwardly towards the first row 10A of supports and a second sheet 21B, 22B, 23B sloping downwardly towards the second row 10B. Preferably, the sheets 21A, 22A, 23A are inclined at the same angle as the sheets 21B, 22B, 23B (and therefore their lengths (d1, d2) are equal). Alternatively, the angles of inclination of the sheets 21A, 22A, 23A may be different from the angles of inclination of the sheets 21B, 22B, 23B (and thus their lengths (d1, d2) may be different - so as, for example, to select the angle of inclination depending on the wind direction in a given location. In addition, there is another outermost sheet 24A (Fig. 2). Furthermore, between the supports 11A-13A, 11B-13B of the opposite rows 10A, 10B, along the supporting ropes 31, 32, 33, there extend control ropes 41, 42, 43 attached to the protective encasement sheets 21A, 22A, 23A, 21B, 22B, 23B at the fixing points of the protective encasement sheets 21A, 22A, 23A, 21B, 22B, 23B, 24A to the supporting ropes 31, 32, 33 and between the supports 11A-13A, 11B-13B of the opposite rows 10A, 10B below the protective encasement sheets 21A, 22A, 23A, 21B, 22B, 23B extend configuration ropes 51, 52, 53 attached to the lower edges 210A, 210B, 220A, 220B, 230A, 230B of the protective encasement sheets 21A, 22A, 23A, 21B, 22B, 23B. Thus, it is possible to move the sheets from a configuration in which the lower edges of the sheets are above the rows of plants (Fig. 1) laterally so that the outermost sheet 21A becomes loose and the outermost sheet 24A becomes visible (Fig. 2) up to a configuration in which the lower edges of the sheets are between the rows of plants (Fig. 3, for simplicity Fig. 1 does not show the outermost sheet 24A, which in this configuration substantially coincides with the right outermost supports, and for simplicity Fig. 3 does not show the outermost sheet 21A, which in this configuration substantially coincides with the left outermost supports).

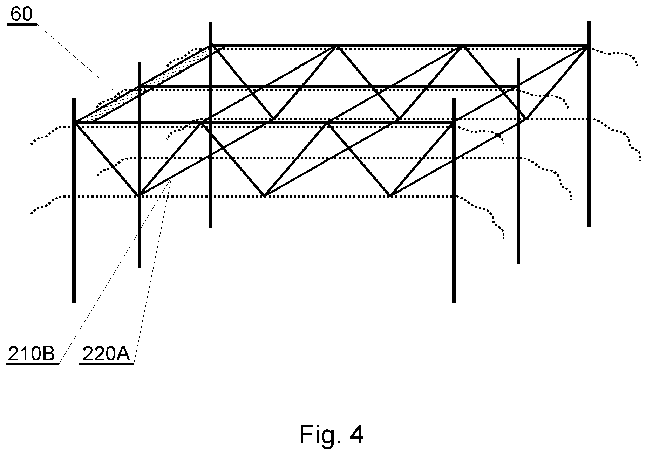

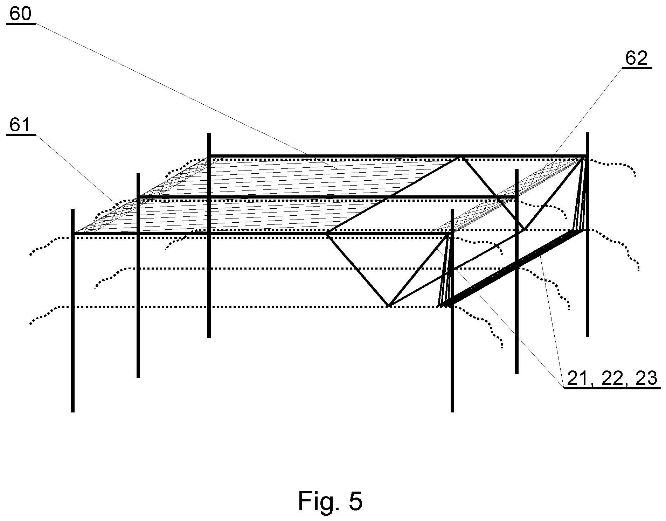

In the second exemplary embodiment (Figs. 4-5), in addition to features present in the first exemplary embodiment, the system comprises a net 60 which is slidably mounted on guides 31, 32, 33, to which control ropes 41, 42, 43 are attached at the fixing points of the net 60 to the guides 31, 32, 33. Along the first row 10A of supports 11A-13A there is a first protective foil strip 61, and along the second row 10B of supports 11B-13B there is a second protective foil strip 62, which is located over the folded protective foil sheets 21A, 22A, 23A, 21B, 22B, 23B or over the folded net 60.

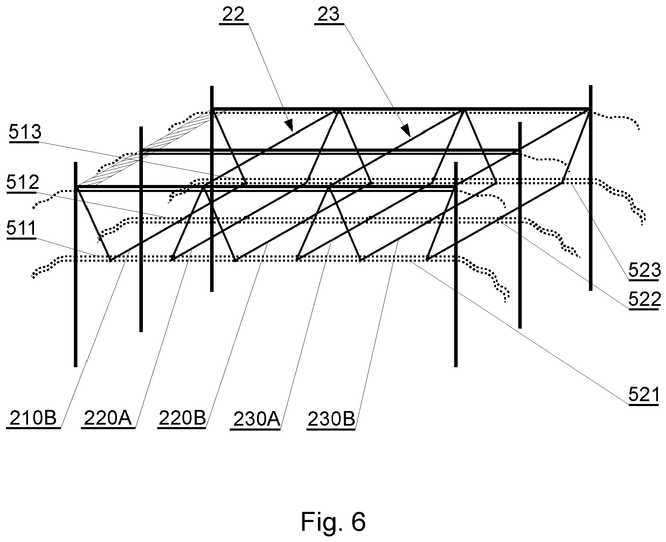

In a third exemplary embodiment (Fig. 6), in addition to features present in the first and second exemplary embodiments, the system includes first configuration ropes 511, 512, 513 attached to the lower edges 210A, 220A, 230A of the first protective encasement sheets 21A, 22A, 23A and second configuration ropes 521, 522, 523 attached to the lower edges 210B, 220B, 230B of the second sheets 21B, 22B, 23B in the pairs of protective encasement sheets 21, 22, 23.

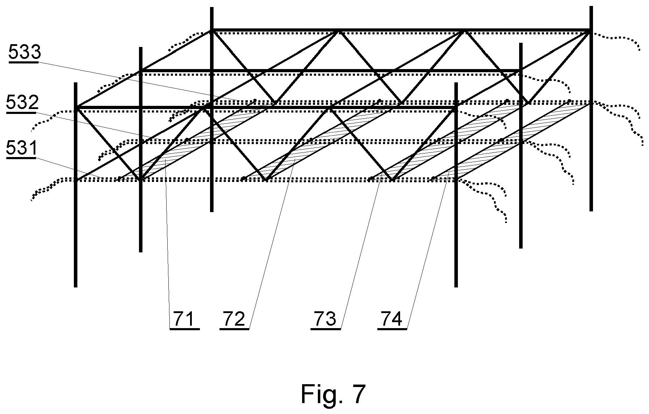

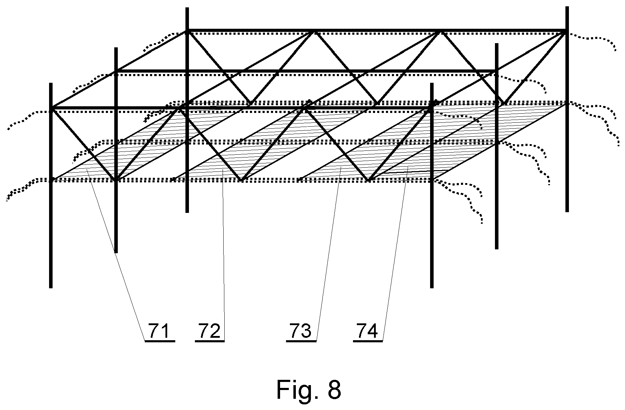

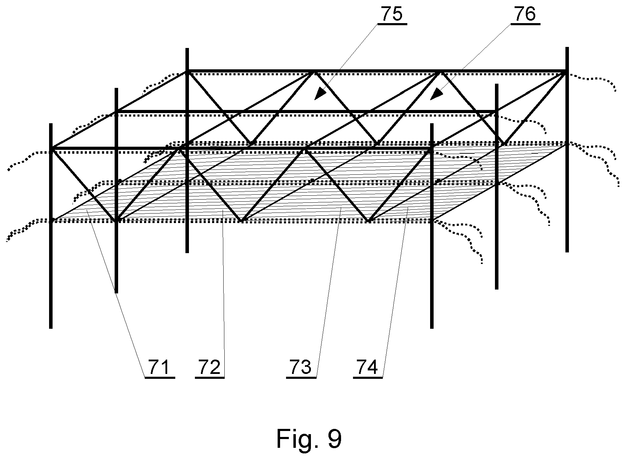

In the fourth exemplary embodiment (Fig. 7-9) in addition to the features present in the first exemplary embodiment, the system includes an insulating encasement strips 71, 72, 73, 74 in the form of a foil to which there are attached third configuration ropes 531, 532, 533 extending between supports 11A-13A, 11B-13B of opposite rows 10A, 10B next to configuration ropes 51, 52, 53, 511, 512, 513, 521, 522, 523, wherein insulating encasement strips 71, 72, 73, 74 rest on configuration ropes 51, 52, 53, 511, 512, 513, 521, 522, 523.

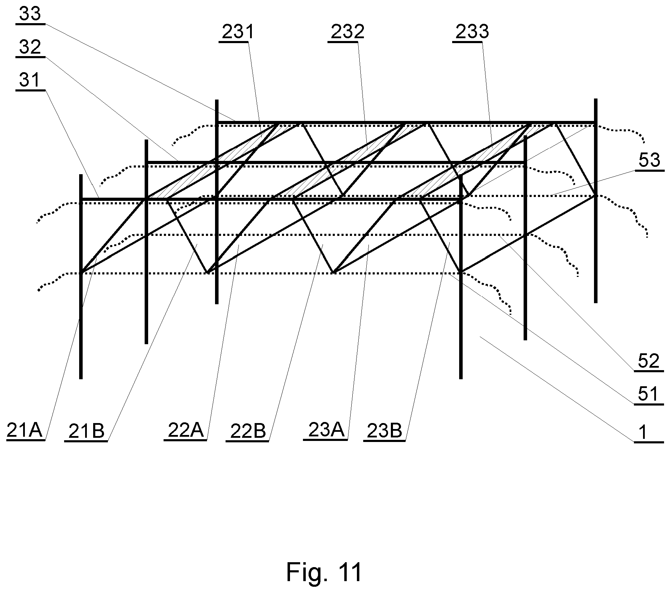

In the fifth exemplary embodiment (Fig. 11), the system for protecting has control ropes 41, 42, 43 adapted to independently unfold the upper edges of the first sheets 21A, 22A, 23A relative to the upper edges of the second sheets 21B, 22B, 23B, and furthermore a net 231, 232, 233 is fixed between the upper edges of the first sheets 21A, 22A, 23A and the upper edges of the second sheets 21B, 22B, 23B.

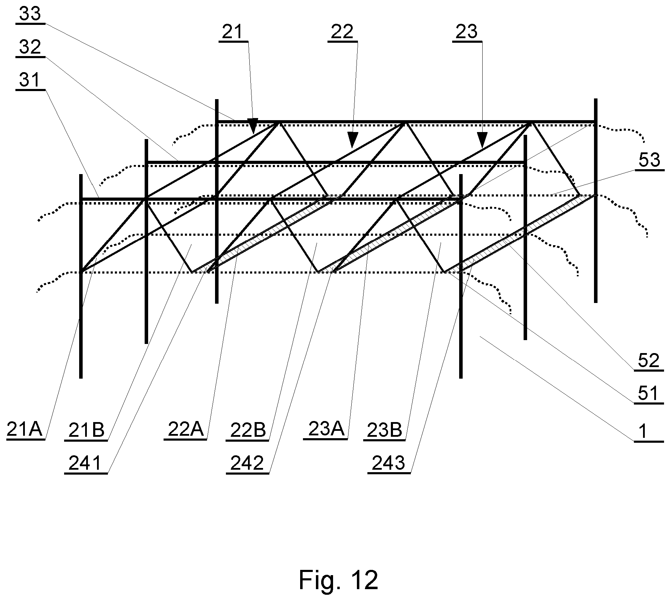

In the sixth exemplary embodiment (Fig. 12), the system for protecting has configuration ropes 51, 52, 53 adapted to independently unfold the lower edges of the first sheets 21A, 22A, 23A relative to the lower edges of the second sheets 21B, 22B, 23B, and furthermore a net 231, 232, 233 is fixed between the lower edges of the first sheets 21A, 22A, 23A and the lower edges of the second sheets 21B, 22B, 23B.

## Claims

1. A system for protecting crops of plants arranged in rows (1) against weather conditions, the system comprising at least two rows (10A, 10B) of supports (11A-13A, 11B-13B) at the extremities of the protected crop area; guides (31, 32, 33) fixed between the supports (11A-13A, 11B-13B) of opposite rows of supports; and at least two pairs (21, 22, 23) of protective encasement sheets (21A, 22A, 23A, 21B, 22B, 23B) attached to the guides (31, 32, 33) and extending perpendicularly with respect to the guides (31, 32, 33), wherein the protective encasement sheets (21A, 22A, 23A, 21B, 22B, 23B) are slidably attached to the guides (31, 32, 33), wherein in each pair, the first sheet is inclined downwards towards the first row of supports and the second sheet is inclined downwards towards the second row of supports, wherein
- between the supports (11A-13A, 11B-13B) of the opposite rows (10A, 10B), along the guides (31, 32, 33), there extend control ropes (41, 42, 43) which are attached to the upper edges of the protective encasement sheets (21A, 22A, 23A, 21B, 22B, 23B) at the points of fixing of the protective encasement sheets (21A, 22A, 23A, 21B, 22B, 23B) to the guides (31, 32, 33);
**characterized in that**:
- the area between the lower edges (210A, 210B, 220A, 220B, 230A, 230B) of the protective encasement sheets (21A, 22A, 23A, 21B, 22B, 23B) of neighboring pairs (21, 22, 23) is permeable to precipitation;
- between the supports (11A-13A, 11B-13B) of the opposite rows (10A, 10B) below the protective encasement sheets (21A, 22A, 23A, 21B, 22B, 23B) there extend configuration ropes (51, 52, 53) attached to the lower edges (210A, 220A, 230A, 210B, 220B, 230B) of the protective encasement sheets (21A, 22A, 23A, 21B, 22B, 23B);
- such that, by means of the control ropes (41, 42, 43) and the configuration ropes (51, 52, 53), the pairs (21, 22, 23) of the protective encasement sheets (21A, 22A, 23A, 21B, 22B, 23B) can be placed in a first configuration, in which the lower edges (210A, 210B, 220A, 220B, 230A, 230B) of the protective encasement sheets (21A, 22A, 23A, 21B, 22B, 23B) are substantially above the rows (1) of plants and in a second configuration, in which the lower edges (210A, 210B, 220A, 220B, 230A, 230B) of the protective encasement sheets (21A, 22A, 23A, 21B, 22B, 23B) are between the rows (1) of plants.

2. The system according to claim 1, **characterized in that** the protective encasement sheets (21A, 22A, 23A, 21B, 22B, 23B) comprise circumferentially reinforced openings providing points of fixing of the sheets to hangers, guides (31, 32, 33), control ropes (41, 42, 43) and/or configuration ropes (51, 52, 53).

3. The system according to claim 1, **characterized in that** the control ropes (41, 42, 43) and/or configuration ropes (51, 52, 53) have a length which is twice the distance between the rows (10A, 10B) of the supports (11A-13A, 11B-13B).

4. The system according to any of the preceding claims, **characterized in that** the configuration ropes (51, 52, 53) comprise first configuration ropes (511, 512, 513) attached to the lower edges (210A, 220A, 230A) of the first protective encasement sheets (21A, 22A, 23A) and second configuration ropes (521, 522, 523) attached to the lower edges (210B, 220B, 230B) of the second protective encasement sheets (21B, 22B, 23B) in each of the pairs (21, 22, 23).

5. The system according to any of the preceding claims, **characterized in that** on the guides (31, 32, 33) there is slidably fixed sheet of a net (60) to which control ropes (41, 42, 43) are attached at the points where the net (60) is fixed to the guides (31, 32, 33).

6. The system according to any of the preceding claims, **characterized in that** along at least one row (10A, 10B) of supports (11A-13A, 11B-13B) there is a protective encasement strip (61, 62) which is positioned over the folded protective encasement sheets (21A, 22A, 23A, 21B, 22B, 23B) or the folded net (60).

7. The system according to any of the preceding claims, **characterized in that** on the configuration ropes (51, 52, 53, 511, 512, 513, 521, 522, 523), along the protective encasement sheets (21A, 22A, 23A, 21B, 22B, 23B) there are insulating encasement strips (71, 72, 73, 74), to which there are attached third configuration ropes (531, 532, 533) extending between supports (11A-13A, 11B-13B) of opposite rows (10A, 10B) next to configuration ropes (51, 52, 53, 511, 512, 513, 521, 522, 523).

8. The system according to claim 7, **characterized in that** the insulating encasement strips (71, 72, 73, 74) have a width equal to the maximum distance between the lower edges (210A, 2108, 220A, 220B, 230A) of the sheets (21A, 21B, 22A, 22B, 23A, 23B).

9. The system according to claim 7, **characterized in that** the insulating encasement strips (71, 72, 73, 74) have a width greater than the maximum distance between the lower edges (210A, 210B, 220A, 220B, 230A, 230B) of the sheets (21A, 21B, 22A, 22B, 23A, 23B) and at the half of their width they are attached by auxiliary ropes (77) to the guides (31, 32, 33).

10. The system according to any of the preceding claims, **characterized in that** the control ropes (41, 42, 43) are adapted to independently unfold the upper edges of the first sheets (21A, 22A, 23A) relative to the upper edges of the second sheets (21B, 22B, 22C).

11. The system according to claim 10, **characterized in that** a net (231, 232, 233) is fixed between the upper edges of the first sheets (21A, 22A, 23A) and the upper edges of the second sheets (21B, 22B, 22C).

12. The system according to of the preceding claims, **characterized in that** the configuration ropes (51, 52, 53) are adapted to independently unfold the lower edges of the first sheets (21A, 22A, 23A) relative to the lower edges of the second sheets (21B, 22B, 22C).

13. The system according to claim 12, **characterized in that** a net (241, 242, 243) is fixed between the lower edges of the first sheets (21A, 22A, 23A) and the lower edges of the second sheets (21B, 22B, 22C).

## Patentansprüche

1. System zum Schutz von in Reihen (1) angeordneten Pflanzenkulturen vor Witterungsbedingungen, wobei das System umfassend mindestens zwei Reihen (10A, 10B) von Stützen (11A-13A, 11B-13B) an den Enden des geschützten Kulturpflanzenbereichs; Führungen (31,32,33), die zwischen den Stützen (11A-13A, 11B-13B) gegenüberliegender Reihen von Stützen befestigt sind; und mindestens zwei Paare (21,22, 23) von Schutzabdeckungsbahnen (21A, 22A, 23A, 21B. 22B, 23B), die an den Führungen (31,32,33) befestigt sind und sich senkrecht zu den Führungen erstrecken, wobei Schutzabdeckungsbahnen (21A, 22A, 23A, 21B, 22B, 23B) gleitend an den Führungen (31, 32, 33) befestigt sind, wobei in jedem Paar die erste Bahn nach unten zur ersten Reihe von Stützen und die zweite Bahn nach unten zur zweiten Reihe von Stützen geneigt ist, wobei - zwischen den Stützen (11A-13A, 11B-13B) der gegenüberliegenden Reihen (10A, 10B) entlang der Führungen (31, 32, 33) Steuerleinen (41, 42, 43) verlaufen, die an den Oberkanten der Schutzabdeckungsbahnen (21A, 22A, 23A, 21B, 22B, 23B) an den Befestigungspunkten der Schutzverkleidungsbahnen (21A, 22A, 23A, 21B, 22B,23B) an den Führungen (31, 32, 33) befestigt sind; **dadurch gekennzeichnet, dass**;
- der Bereich zwischen den Unterkanten (210A, 210B, 220A, 220B, 230A, 230B) der Schutzabdeckungsbahnen (21A, 22A, 23A, 21B, 22B, 23B) benachbarter Paare (21, 22, 23) für Niederschlag durchlässig ist;
- zwischen den Stützen (11A-13A, 11B-13B) der gegenüberliegenden Reihen (10A, 10B) unterhalb der Schutzabdeckungsbahnen (21A, 22A, 23A, 21B, 22B, 23B) erstrecken sich Konfigurationsseile (51, 52, 53), die an den Unterkanten (210A, 220A, 230A, 210B,220B, 230B) der Schutzhüllenbahnen (21A, 22A, 23A, 21B, 22B, 23B) befestigt sind;
- so dass mittels der Steuerleinen (41, 42, 43) und der Konfigurationsleinen (51,52, 53) die Paare (21, 22, 23) der Schutzhüllenbahnen (21A, 22A, 23A,21B, 22B, 23B) in eine erste Konfiguration gebracht werden können, in der die Unterkanten (210A, 210B, 220A, 220B, 230A, 230B) der Schutzabdeckungsbahnen (21A, 22A, 23A, 21B, 22B, 23B) im Wesentlichen über den Reihen (1) von Pflanzen liegen, und in einer zweiten Konfiguration, in der die Unterkanten (210A, 210B, 220A, 220B, 230A, 230B) der Schutzabdeckungsbahnen (21A, 22A, 23A, 21B, 22B, 23B) zwischen den Reihen (1) von Pflanzen liegen.

2. System nach einem der Ansprüche 1, **dadurch gekennzeichnet, dass** die Schutzabdeckungsbahnen (21A, 22A, 23A, 21B, 22B, 23B) in Umfangsrichtung verstärkte Löcher aufweisen, die Befestigungspunkte der Bahnen an den Aufhängern, Führungen (31, 32, 33), Steuerleinenn (41, 42, 43) und/oder Konfigurationskabeln (51, 52, 53) bilden.

3. System nach einem der Ansprüche 1, **dadurch gekennzeichnet, dass** die Steuerleinen (41, 42, 43) und/oder Konfigurationsseile (51, 52, 53) eine Länge haben, die doppelt so groß ist wie der Abstand zwischen den Reihen (10A, 10B) der Stützen (11A-13A, 11B-13B).

4. System nach einem der nach einem der vorstehenden Ansprüche, **dadurch gekennzeichnet, dass** die Konfigurationsseile (51, 52, 53) erste Konfigurationsseile (511, 512, 513) umfassen, die an den Unterkanten (210A, 220A, 230A) der ersten Schutzabdeckungsbahnen (21 A, 22A, 23A) und zweite Konfigurationsseile (521, 522, 523), die an den Unterkanten (21 OB, 220B, 230B) der zweiten Schutzabdeckungsbahnen (21B, 22B, 23B) in jedem der Paare (21, 22, 23) befestigt sind.

5. System nach einem der vorstehenden Ansprüche **dadurch gekennzeichnet, dass** ferner an den Führungen (31, 32, 33) eine Netzbahn (60) verschiebbar befestigt ist, an der an den Befestigungspunkten des Netzes (60) an den Führungen (31, 32, 33) Steuerleinen (41, 42, 43) befestigt sind.

6. System nach einem der vorstehenden Ansprüche **dadurch gekennzeichnet, dass** entlang mindestens einer Reihe (10A, 10B) von Stützen (11A-13A, 11B-13B) ein Schutzabdeckungsstrifen (61, 62) vorhanden ist, das über den zusammengefalteten Schutzabdeckungsbahnen (21A, 22A, 23A, 21B, 22B, 23B) oder dem zusammengefalteten Netz (60) positioniert ist.

7. System nach einem der vorstehenden Ansprüche **dadurch gekennzeichnet, dass** an den Konfigurationsseilen (51, 52, 53, 511, 512, 513, 521, 522, 523) entlang den Schutzabdeckungsbahnen (21A, 22A, 23A, 21B, 22B, 23B) Streifen (71, 72, 73, 74) der Isolierabdeckung angeordnet sind, an denen die dritten Konfigurationsseile (531, 532, 533) befestigt sind, die sich zwischen den Stützen (11A-13A, 11B-13B) der gegenüberliegenden Reihen (10A, 10B) an den Konfigurationsseilen (51, 52, 53, 511, 512, 513, 521, 522, 523) erstrecken.

8. System nach Anspruch 7 **dadurch gekennzeichnet, dass** die Streifen (71, 72, 73, 74) der Isolierabdeckung eine Breite aufweisen, die dem maximalen Abstand zwischen den Unterkanten (210A, 21 OB, 220A, 220B, 230A, 230B) der Bahnen (21 A, 21B, 22A, 22B, 23A, 23B) entspricht.

9. System nach Anspruch 7 **dadurch gekennzeichnet, dass** die Streifen (71, 72, 73, 74) der Isolierabdeckung eine Breite aufweisen, die größer ist als der maximale Abstand zwischen den Unterkanten (210A, 21 OB, 220A, 220B, 230A, 230B) der Bahnen (21 A, 21B, 22A, 22B, 23A, 23B) und die Hälfte ihrer Breite durch Hilfsseile (77) an den Führungen (31, 32, 33) befestigt ist.

10. System nach einem der vorangehenden Ansprüche. **dadurch gekennzeichnet, dass** die Steuerleinen (41, 42, 43) so beschaffen sind, dass sie unabhängig voneinander die Oberkanten der ersten Bahnen (21A, 22A, 23A) relativ zu den Oberkanten der zweiten Bahnen (21B, 22B, 22C) verlängern.

11. System nach Anspruch 10 **dadurch gekennzeichnet, dass** ein Netz (231, 232, 233) zwischen den Oberkanten der ersten Bahnen (21A, 22A, 23A) und den Oberkanten der zweiten Bahnen (21B, 22B, 22C) befestigt ist.

12. System nach einem der vorhergehenden Ansprüche **dadurch gekennzeichnet, dass** die Konfigurationsseile (51, 52, 53) geeignet sind, die Unterkanten der ersten Bahnen (21A, 22A, 23A) unabhängig voneinander relativ zu den Unterkanten der zweiten Bahnen (21B, 22B, 22C) zu verlängern.

13. System nach Anspruch 12 **dadurch gekennzeichnet, dass** ein Netz (241, 242, 243) zwischen den Unterkanten der ersten Bahnen (21A, 22A, 23A) und den Unterkanten der zweiten Bahnen (21B, 22B, 22C) befestigt ist.

## Revendications

1. Système de protection des cultures de plantes disposées en rangées (1) contre des conditions climatiques, le système comprenant au moins deux rangées (10A, 10B) de supports (11A-13A,11B-13B) aux extrémités de la zone de culture protégée ; des guides (31, 32, 33) fixés entre les supports des rangées de supports opposées; et au moins deux paires (21, 22, 23) de feuilles d'enveloppe protectrice (21A, 22A, 23A, 21B, 22B, 23B) fixées aux guides (31, 32, 33) et s'étendant perpendiculairement par rapport aux guides (31, 32, 33), dans laquelle les feuilles d'enveloppe protectrice (21A, 22A, 23A, 21B, 22B, 23B) sont fixées de manière coulissante aux guides (31, 32, 33), dans lequel, dans chaque paire, la première feuille est inclinée vers le bas en direction de la première rangée de supports et la deuxième feuille est inclinée vers le bas en direction de la deuxième rangée de supports, dans lequel
- entre les supports (11A-13A, 11B-13B) des rangées opposées (10A, 10B), le long des guides (31, 32, 33), s'étendent des cordes de commande (41, 42, 43) qui sont fixées aux bords supérieurs des feuilles d'enveloppe protectrices (21A, 22A, 23A, 21B, 22B, 23B) aux points de fixation des feuilles d'enveloppe de protection (21A, 22A, 23A, 21B, 22B, 23B) aux guides (31, 32, 33);
**caractérisé en ce que**:
- la zone entre les bords inférieurs (210A, 210B, 220A, 220B, 230A, 230B) des feuilles d'enveloppe protectrice (21A, 22A, 23A, 21B, 22B, 23B) de paires voisines (21, 22, 23) est perméable aux précipitations ;
- entre les supports (11A-13A, 11B-13B) des rangées opposées (10A, 10B) sous les feuilles d'enveloppe protectrices (21A, 22A, 23A, 21B, 22B, 23B) s'étendent des cordes de configuration (51, 52, 53) fixées aux bords inférieurs (210A, 220A, 230A, 210B, 220B, 230B) des feuilles d'enveloppe protectrices (21A, 22A, 23A, 21B, 22B, 23B) ;
de telle sorte que, à l'aide des cordes de commande (41, 42, 43) et des cordes de configuration (51,52, 53), les paires (21, 22, 23) de feuilles d'enveloppe protectrice (21A, 22A, 23A, 21B, 22B, 23B) puissent être placées dans une première configuration, dans laquelle les bords inférieurs (210A, 210B, 220A, 220B, 230A, 230B) des feuilles d'enveloppe protectrices (21A, 22A, 23A, 21B, 22B, 23B) sont sensiblement au-dessus des rangées (1) de plantes, et dans une deuxième configuration, dans laquelle les bords inférieurs (210A, 210B, 220A, 220B, 230A, 230B) des feuilles d'enveloppe protectrices (21A, 22A, 23A, 21B, 22B, 23B) se trouvent entre les rangées (1) de plantes.

2. Le système selon la revendication 1, **caractérisé en ce que** les feuilles d'enveloppe protectrices (21A, 22A, 23A, 21B, 22B, 23B) comportent des trous renforcés circonférentiellement fournissant des points de fixation des feuilles aux cintres, aux guides (31, 32, 33), aux câbles de commande (41, 42, 43) et/ou aux câbles de configuration (51, 52, 53).

3. Système selon la revendication 1, **caractérisé en ce que** les câbles de commande (41, 42, 43) et/ou les câbles de configuration (51, 52, 53) ont une longueur égale à deux fois la distance entre les rangées (10A, 10B) de supports (11A-13A, 11B-13B).

4. Système l'une quelconque des revendications précédentes, **caractérisé en ce que** les câbles de configuration (51, 52, 53) comprennent des premières câbles de configuration (511, 512, 513) attachés aux bords inférieurs (210A, 220A, 230A) des premières feuilles d'enveloppe protectrices (21 A, 22A, 23A) et des deuxièmes câbles de configuration (521, 522, 523) fixés aux bords inférieurs (210B, 220B, 230B) des deuxièmes feuilles d'enveloppe protectrices (21B, 22B, 23B) dans chacune des paires (21, 22, 23).

5. Système selon l'une quelconque des revendications précédentes, **caractérisé en ce qu'**il y a en outre une feuille de filet (60) fixée de manière coulissante aux guides (31, 32, 33), à laquelle des câbles de commande (41, 42, 43) sont fixés aux points d'attache du filet (60) aux guides (31, 32, 33).

6. Système selon l'une quelconque des revendications précédentes, **caractérisé en ce que** le long d'au moins une rangée (10A, 10B) de supports (11A-13A, 11B-13B) se trouve une bande d'enveloppe protectrices (61, 62) qui est positionnée au-dessus des feuilles d'enveloppe protectrices rapprochées (21A, 22A, 23A, 21B, 22B, 23B) ou au-dessus du filet rapproché (60).

7. Système selon l'une quelconque des revendications précédentes, **caractérisé en ce que** sur les câbles de configuration (51, 52, 53, 511, 512, 513, 521, 522, 523), le long des feuilles d'enveloppe protectrices (21A, 22A, 23A, 21B, 22B, 23B), se trouvent des bandes de la couverture isolante (71, 72, 73, 74), auxquelles sont attachées les troisièmes câbles de configuration (531, 532, 533) s'étendant entre les supports (11A-13A, 11B-13B) des rangées opposées (10A, 10B) au niveau des câbles de configuration (51, 52, 53, 511, 512, 513, 521, 522, 523).

8. Système selon la revendication 7, **caractérisé en ce que** les bandes de la couverture isolante (71, 72, 73, 74) ont une largeur égale à la distance maximale entre les bords inférieurs (210A, 210B, 220A, 220B, 230A, 230B) des feuilles (21A, 21B, 22A, 22B, 23A, 23B).

9. Système selon la revendication 7, **caractérisé en ce que** les bandes de la couverture isolante (71, 72, 73, 74) ont une largeur supérieure à la distance maximale entre les bords inférieurs (210A, 210B, 220A, 220B, 230A, 230B) des feuilles (21A, 21B, 22A, 22B, 23A, 23B) et au milieu de leur largeur sont fixées par des câbles auxiliaires (77) aux guides (31, 32, 33).

10. Système selon l'une quelconque des revendications précédentes, **caractérisé en ce que** les câbles de commande (41, 42, 43) sont adaptés pour étendre indépendamment les bords supérieurs des premières feuilles (21A, 22A, 23A) par rapport aux bords supérieurs des deuxièmes feuilles (21B, 22B, 22C).

11. Système selon la revendication 10, **caractérisé en ce qu'**un filet (231, 232, 233) est fixé entre les bords supérieurs des premières feuilles (21A, 22A, 23A) et les bords supérieurs des secondes feuilles (21B, 22B, 22C).

12. Système selon l'une quelconque des revendications précédentes, **caractérisé en ce que** les câbles de configuration (51, 52, 53) sont adaptées pour étendre indépendamment les bords inférieurs des premières feuilles (21A, 22A, 23A) par rapport aux bords inférieurs des deuxièmes feuilles (21B, 22B, 22C).

13. Système selon la revendication 12, **caractérisé en ce qu'**un filet (241, 242, 243) est fixé entre les bords inférieurs des premières feuilles (21A, 22A, 23A) et les bords inférieurs des deuxièmes feuilles (21B, 22B, 22C).
